# EUROPEAN PATENT SPECIFICATION

(11) **EP 2 094 510 B1**
(45) Date of publication and mention of the grant of the patent: **13.10.2010**
(21) Application number: 06829717.5
(22) Date of filing: 18.12.2006
(51) Int. Cl.: B60C 1/00, C08C 19/28, C08F 291/02, C08L 9/06, C08L 15/00, C08L 21/00, C08L 23/22, C08L 23/26

(54) **TIRE AND CROSSLINKABLE ELASTOMERIC COMPOSITION**
REIFEN UND VERNETZBARE ELASTOMERE ZUSAMMENSETZUNG
PNEU ET COMPOSITION ÉLASTOMÈRE RÉTICULABLE

(43) Date of publication of application: 02.09.2009
(73) Proprietor: Pirelli Tyre S.p.A., 20126 Milano (IT)
(72) Inventor: MAHMIAS, Nanni Marco, 20126 Milano (IT); PUPPI, Cristiano, 20126 Milano (IT); CAPRIO, Michela, 20126 Milano (IT); GRASSI, Lisa, 20126 Milano (IT); ROSSIELLO, Luigia, 20126 Milano (IT); TIRELLI, Diego, 20126 Milano (IT)
(74) Representative: Allaix, Roberto
(86) International application number: PCT/EP2006/012196
(87) International publication number: WO 2008/074341

(56) References cited:
- EP-A1- 0 158 794
- GB-A- 1 462 444
- JP-A- 4 318 044
- JP-A- 11 029 656
- JP-A- 2005 068 240
- JP-A- 2006 176 579
- JP-A- 2006 199 949
- JP-A- 2006 225 448
- US-A- 4 421 891
- US-A- 5 859 115
- US-A1- 2002 161 119
- US-A1- 2004 166 346

## Description

The present invention relates to a tire comprising a crosslinkable elastomeric composition.

More in particular the present invention relates to a tire, including at least one structural element obtained by crosslinking a crosslinkable elastomeric composition comprising at least one elastomeric polymer grafted with at least one phenolic resin.

In the field of production of tires, it is known to use resins such as, for example, novolak-type or resol-type phenolic resins.

For example, in order to improve the abrasion resistance of the tire tread band to be used in heavy vehicles, it was proposed to introduce specific thermosetting resins in the polymeric base such as, for example, m-cresol-formaldehyde or phenolic resins, as described, for example, in the following Japanese Patent Applications: JP 7-109381, JP 7-109382, or JP 7-109383.

United States Patent US 5,026,762 relates to a rubber composition for use in tire treads which comprises:
(a) 100 parts by weight of a base rubber comprising a first rubber and a second rubber blended in a weight ratio of from 50:50 to 75:25, said first rubber containing natural rubber in an amount of at least 80% by weight, and said second rubber consisting essentially of a butadiene rubber;
(b) from 55 to 90 parts by weight of a carbon black having an iodine adsorption of from 90 to 200 mg/g and a dibutyl phthalate adsorption of from 100 to 140 ml/100 g; and
(c) from 1 to 10 parts by weight of a novolak-type m-cresol-formaldehyde resin;
said composition having a dynamic Young's modulus of not less than 8 MPa at 0° C.

The abovementioned rubber composition for tire treads is said to be useful for all-weather tires and to have a sufficient resistance to snow and ice skidding, to abrasion, to cracking and to crack growth and adequate durability.

United States Patent US 6,376,587 relates to a rubber composition for a tire tread comprising per 100 parts by weight of a diene based rubber component containing at least 50 parts by weight of styrene butadiene rubber: (1) 5 to 50 parts by weight of carbon black having a nitrogen absorption surface area of from 90 to 180 m²/g and a DBP absorption amount of from 100 to 170 ml/100 g; (2) 5 to 50 parts by weight of silica; (3) wherein the total amount of said carbon black and said silica is from 30 to 90 parts by weight; and (4) 5 to 20% by weight of a silane coupling agent relative to the blended amount of silica; (5) 1 to 15 parts by weight of a thermoplastic (novolak-type) Phenolic resin; and (6) 5 to 20% by weight of hexamethylenetetramine relative to the blended amount of resin, wherein tan δ at 60°C is lower than or equal to 0.14, tan δ at 0°C is higher than or equal to 0.50, dynamic modulus E' at 30°C is higher than or equal to 1.2×10⁷ pa, and tensile stress at 300% (M300) at 25°C is lower than or equal to 9.5 MPa. The abovementioned rubber composition is said to reduce the rolling resistance and to improve the fuel consumption without impairing the braking performance and the turning performance of an automobile on a wet road surface.

JP 2006 199949 describes a rubber composition comprising a reaction product prepared by reacting at least one kind of resin (in particular, a phenol resin) with an inorganic metal compound.

JP 2006 176579 describes a rubber composition containing at least one inorganic metal compounds and at least one phenol resin.

JP 2006 225448 describes a rubber composition comprising 0.5-10 pt(s) wt. of a phenolic-resin.

JP 2005 068240 describes a tread rubber composition comprising 5-15 pts. mass of a phenolic resin.

JP 11 029656 describes a rubber composition comprising a phenol resin in an amount of 3-20 parts by weight.

US 5,859,115 describes a rubber mixture for a tire tread comprising one phenolic component, in a proportion of 0,5-20 parts by weight.

JP 04 318044 describes a rubber composition for tire treads containing 2-15 pts.wt. granular phenolic resin.

US 2004-166346 describes rubber compounds containing (A) uncrosslinked, double bond-containing rubbers, (B) crosslinked rubber particles and (C) phenolic resin adducts or condensed phenolic resins in quantities of 0,1 to 50 parts by weight. Component (A) can be modified by functional groups that react with the phenolic resin adduct and are capable of improving the coupling of component (B) to the surrounding component (A).

None of these documents, alone or in combination, describe or suggest the rubber composition according to the present invention.

However, the Applicant has noticed that the use of the above disclosed phenolic resins in crosslinkable elastomeric compositions, may negatively affect their abrasion resistance.

Consequently, the Applicant has faced the problem of providing a tire having high abrasion resistance combined with low rolling resistance.

The Applicant has now found that it is possible to obtain a tire having the above reported properties by using a crosslinkable elastomeric compositions comprising at least one elastomeric polymer grafted with at least one phenolic resin.

The tire so obtained shows high abrasion resistance combined with low rolling resistance. Furthermore, said tire show good mechanical properties (both static and dynamic).

According to a first aspect, the present invention relates to a tire comprising at least one structural element including a crosslinked elastomeric material obtained by crosslinking a crosslinkable elastomeric composition comprising a crosslinkable elastomeric base comprising at least 30 phr, preferably of from 50 phr to 100 phr, of at least one elastomeric polymer grafted with at least one phenolic resin.

The grafting of said at least one phenolic resin onto said at least one elastomeric polymer may be determined according to known techniques such as, for example, by FTIR analysis or ¹H-NMR analysis: further details about said techniques will be disclosed in the examples which follow.

Preferably, said crosslinkable elastomeric base further comprises at least one second elastomeric polymer in an amount not higher than or equal to 70 phr, preferably of from 0 phr to 50 phr.

For the purpose of the present description and of the claims which follow, the term "crosslinkable elastomeric base" means any polymer or polymers mixture, either natural or synthetic, capable of assuming all the chemical-physical and mechanical properties typical of elastomeric polymers as a result of crosslinking with system known in the art such as, for example, a sulfur-based system or a peroxide-based system.

For the purposes of the present description and of the claims which follow, the term "phr" means the parts by weight of a given component of the elastomeric composition per 100 parts by weight of the elastomeric base.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, the tire comprises:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

According to one preferred embodiment, said at least one phenolic resin is grafted directly onto the elastomeric polymer.

According to a further preferred embodiment, said at least one phenolic resin is grafted onto the elastomeric polymer through at least one functional group.

According to one preferred embodiment, said crosslinkable elastomeric composition further comprises from 0 phr to 120 phr, preferably from 20 phr to 90 phr, of at least one carbon black reinforcing filler.

According to one preferred embodiment, said elastomeric polymer grafted with at least one phenolic resin may have a weight average molecular weight (M_{w}) not lower than 80,000, preferably of from 100,000 to 1,000,000. Said weight average molecular weight (M_{w}) may be determined according to known techniques such as, for example, by gel permeation chromatography (GPC).

According to a further preferred embodiment, said elastomeric polymer grafted with at least one phenolic resin may have a Mooney viscosity ML(1+4) not lower than 40, preferably of from 50 to 110. Said Mooney viscosity ML(1+4) may be determined according to Standard ASTM D1646-04 (at 100°C).

The phenolic resin may be introduced into the elastomeric polymer by means of processes known in the art such as, for example, the processes disclosed in United States Patents US 2,227,797, or US 4,105,610.

According to one preferred embodiment, said phenolic resin may be grafted onto the elastomeric polymer by means of a process comprising:
- feeding at least one elastomeric polymer, said elastomeric polymer optionally containing at least one functional group, and at least one phenolic resin, into at least one extruder comprising: a housing including at least one feed opening and a discharge opening, and at least one screw rotatably mounted in said housing;
- mixing and softening said mixture so as to obtain an elastomeric polymer grafted with at least one phenolic resin;
- discharge the elastomeric polymer obtained in the above step through the discharge opening.

According to a further preferred embodiment, said phenolic resin may be grafted onto said elastomeric polymer by means of a process comprising:
- feeding at least one elastomeric polymer, at least one functionalized monomer, and at least one phenolic resin, into at least one extruder comprising: a housing including at least one feed opening and a discharge opening, and at least one screw rotatably mounted in said housing;
- mixing and softening said mixture so as to obtain an elastomeric polymer grafted with at least one phenolic resin;
- discharging the elastomeric polymer obtained in the above step through the discharge opening.

Preferably, said processes may be carried out at a temperature of from 20°C to 300°C, more preferably of from 80°C to 250°C.

Preferably, said processes may be carried out for a time of from 10 seconds to 5 minutes, more preferably of from 30 seconds to 3 minutes.

Preferably, said extruder is a co-rotating twin-screw extruder.

Said elastomeric polymer grafted with at least one phenolic resin may be obtained in the form of a continuous ribbon or, alternatively, in the form of a subdivided product.

According to one preferred embodiment, said at least one phenolic resin may be selected, for example, from:
- novolak-type phenolic resins or resol-type phenolic resins obtained from the reaction of a phenolic compound such as, for example, phenol, alkyl substituted phenol, arylalkyl or alkylaryl substituted phenol, resorcinol, alkyl substituted resorcinol, arylalkyl or alkylaryl substituted resorcinol, or mixtures thereof, with an aldehyde such as, for example, formaldehyde, p-formaldehyde, butyraldheyde, benzaldehyde, salicylaldheyde, acetaldehyde, propionaldehyde, crotonaldehyde, butyraldehyde, iso-butyraldehyde, n-valeraldehyde, crotonaldehyde, cinnamaldheyde, or mixtures thereof;
- phenolic resins obtained from the reaction of alkyl substituted phenol and acetylene such as, for example, p-t-butylphenol-acetylene resin;
- substituted melamine resins such as, for example, N-substituted oxymethylmelamine resins;
- terpene phenolic resins obtained by alkylating phenolic compounds with terpene hydrocarbons.

Novolak-type phenolic resins, resol-type phenolic resins, or mixtures thereof, are particularly preferred.

Specific examples of novolak-type phenolic resins, or resol-type phenolic resins, which may be advantageously used according to the present invention are: octylphenol-formaldehyde resin, octylphenol-formaldehyde resin containing methylol groups, or mixture thereof.

Examples of phenolic resins which may be used according to the present invention and are available commercially are the products known under the name of SP-1068, SP-1045, from Schenectady International.

As disclosed above, said at least one phenolic resin is preferably grafted onto the elastomeric polymer through at least one functional group.

According to one preferred embodiment, said at least one functional group may be selected, for example from: carboxylic groups; carboxylate groups; anhydride groups; ester groups, or mixtures thereof. Anhydride groups, carboxylic groups, are particularly preferred.

The functional group may be introduced into the elastomeric polymer by means of processes known in the art such as, for example, during the production of the elastomeric polymer by co-polymerization with at least one corresponding functionalized monomer; or by subsequent modification of the elastomeric polymer by grafting said at least one functionalized monomer, said grafting being optionally carried out in the presence of a free radical initiator (for example, an organic peroxide).

Preferably, said at least one functional group may be introduced into the elastomeric polymer by means of a process comprising:
- feeding at least one elastomeric polymer and at least one functionalized monomer into at least one extruder comprising: a housing including at least one feed opening and a discharge opening, and at least one screw rotatably mounted in said housing;
- mixing and softening said mixture so as to obtain an elastomeric polymer including at least one functional group;
- discharging the elastomeric polymer obtained in the above step through the discharge opening.

Further details about the above disclosed process may be found, for example, in International Patent Application WO 2005/118695.

Functionalized monomers which may be advantageously used include, for example, monocarboxylic or dicarboxylic acids, or derivatives thereof, in particular salts, anhydrides or esters.

Examples of monocarboxylic or dicarboxylic acids, or derivatives thereof are: maleic acid, fumaric acid, citraconic acid, itaconic acid, acrylic acid, methacrylic acid, dithiodisuccinic acid, dithiodipropionic acid, and salts, anhydrides or esters derived therefrom, or mixtures thereof. Maleic anhydride, dithiodipropionic acid, are particularly preferred.

According to one preferred embodiment, the elastomeric polymer which may be utilized in the production of the elastomeric polymer grafted with at least one phenolic resin, may be selected from those commonly used in sulfur-crosslinkable elastomeric compositions, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes. Preferably, the obtained polymers or copolymers contain said at least one comonomer selected from monovinylarenes in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, isoprene, or mixtures thereof, are particularly preferred. Isoprene, 1,3-butadiene, are still particularly preferred.

Monovinylarenes which may optionally be used as comonomers generally contain from 8 to 20, preferably from 8 to 12 carbon atoms, and may be selected, for example, from: stirene; 1-vinylnaphthalene; 2-vinylnaphthalene; various alkyl, cycloalkyl, aryl, alkylaryl or arylalkyl derivatives of stirene such as, for example, α-methylstirene, 3-methylstirene, 4-propylstirene, 4-cyclohexylstirene, 4-dodecylstirene, 2-ethyl-4-benzylstirene, 4-p-tolylstirene, 4-(4-phenylbutyl)stirene, or mixtures thereof. Stirene is particularly preferred.

Preferably, the elastomeric polymer may be selected, for example, from: cis-1,4-polyisoprene (natural or synthetic), 3,4-polyisoprene, polybutadiene (in particular polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

Alternatively, elastomeric polymer of one or more monoolefins with an olefinic comonomer and at least one diene, or derivatives thereof, may be used. The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene/diene copolymers (EPDM); polyisobutene; butyl rubbers; halobutyl rubbers, in particular chlorobutyl or bromobutyl rubbers; or mixtures thereof.

Elastomeric polymers functionalized by reaction with suitable terminating agents or coupling agents may also be used. In particular, elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

As disclosed above, the crosslinkable elastomeric base, may further comprises at least one second elastomeric polymer. Said elastomeric polymer may be selected, for example, from:
- cis-1,4-polyisoprene (natural or synthetic), 3,4-polyisoprene, polybutadiene (in particular polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof;
- ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof;
or mixtures thereof.

As disclosed above, said crosslinkable elastomeric composition may further comprise at least one carbon black reinforcing filler.

According to one preferred embodiment, the carbon black reinforcing filler which may be used in the present invention may be selected from those having a surface area of not less than 20 m²/g (determined by CTAB absorption as described in Standard ISO 6810:1995).

At least one additional reinforcing filler may advantageously be added to the above disclosed crosslinkable elastomeric composition, in an amount generally of from 0 phr to 120 phr, preferably of from 20 phr to 90 phr. The reinforcing filler may be selected from those commonly used for crosslinked manufactured products, in particular for tires, such as, for example, silica, alumina, aluminosilicates, calcium carbonate, kaolin, or mixtures thereof. Silica is particularly preferred.

The silica which may be used in the present invention may generally be a pyrogenic silica or, preferably, a precipitated silica, with a BET surface area (measured according to Standard ISO 5794/1:2005) of from 50 m²/g to 500 m²/g, preferably of from 70 m²/g to 200 m²/g.

When a reinforcing filler comprising silica is present, the crosslinkable elastomeric composition may advantageously incorporate a silane coupling agent capable of interacting with the silica and of linking it to the elastomeric polymer during the vulcanization.

According to one preferred embodiment, said silane coupling agent may be selected, for example, from those having at least one hydrolizable silane group which may be identified, for example, by the following general formula (I):

(R)₃Si-CₙH₂ₙ-X (I)

wherein the groups R, which may be equal or different from each other, are selected from: alkyl, alkoxy or aryloxy groups or from halogen atoms, on condition that at least one of the groups R is an alkoxy or aryloxy group; n is an integer of from 1 to 6, extremes included; X is a group selected from: nitroso, mercapto, amino, epoxide, vinyl, imide, chloro, -(S)ₘCₙH₂ₙ-Si-(R)₃, or -S-COR, wherein m and n are integers of from 1 to 6, extremes included, and the groups R are defined as above.

Among the silane coupling agents that are particularly preferred are bis(3-triethoxysilyl-propyl)tetrasulphide, bis(3-triethoxysilylpropyl)-disulphide, or mixtures thereof. Said coupling agents may be used as such or as a suitable mixture with an inert filler (for example, carbon black) so as to facilitate their incorporation into the crosslinkable elastomeric base.

According to one preferred embodiment, said silane coupling agent is present in the crosslinkable elastomeric composition in an amount of from 0 phr to 10 phr, preferably of from 0.5 phr to 5 phr.

The crosslinkable elastomeric composition above disclosed may be vulcanized according to known techniques, in particular with sulfur-based vulcanizing systems commonly used for elastomeric polymers. To this end, in the composition, after one or more stages of thermomechanical processing, a sulfur-based vulcanizing agent is incorporated together with vulcanization accelerators. In the final processing stage, the temperature is generally kept below 150°C and preferably below 130°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected, for example, from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said elastomeric composition: antioxidants, anti-ageing agents, plasticizers, adhesives, anti-ozone agents, modifying resins, waxes, fibres (for example Kevlar^{®} pulp), or mixtures thereof.

For the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from 0 phr to 70 phr, preferably from 3 phr to 30 phr.

The above disclosed crosslinkable elastomeric composition may be prepared by mixing together the crosslinkable elastomeric base with the reinforcing filler and with the other additives optionally present according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

The present invention will now be illustrated in further detail by means of a number of illustrative embodiments, with reference to the attached Fig. 1-2:
- Fig. 1 is a view in cross section of a portion of a tire made according to the invention;
- Fig. 2 is a schematic diagram of a production plant for producing an elastomeric polymer grafted with at least one phenolic resin according to the process of the present invention.

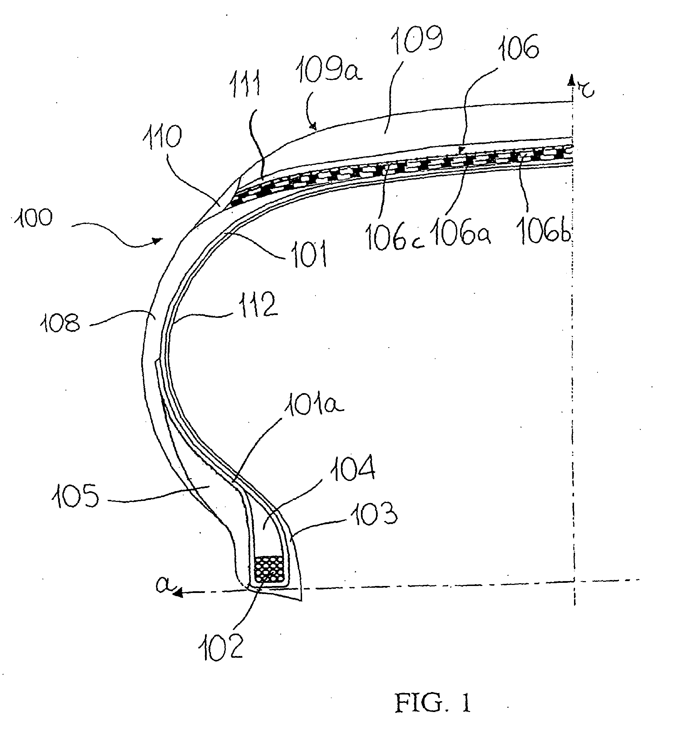

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680, or EP 928,702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. The core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric composition.

A sidewall (108) is also applied externally onto the carcass ply (101), this sidewall extending, in an axially external position, from the bead (103) to the end of the belt structure (106).

A tread band (109), which may be made according to the present invention, whose lateral edges are connected to the sidewalls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the sidewalls (108). Alternatively, the end portion of the sidewall (108) directly covers the lateral edge of the tread band (109).

In the case of tubeless tires, a rubber layer (112) generally known as a liner, which provides the necessary impermeability to the inflation air of the tire, may also be provided in a radially internal position relative to the carcass ply (101).

The process for producing the tire according to the present invention may be carried out according to techniques and using apparatus that are known in the art, as described, for example, in European Patents EP 199,064, or in United States Patent US 4,872,822, or US 4,768,937, said process including manufacturing the crude tire and subsequently moulding and vulcanizing the crude tire.

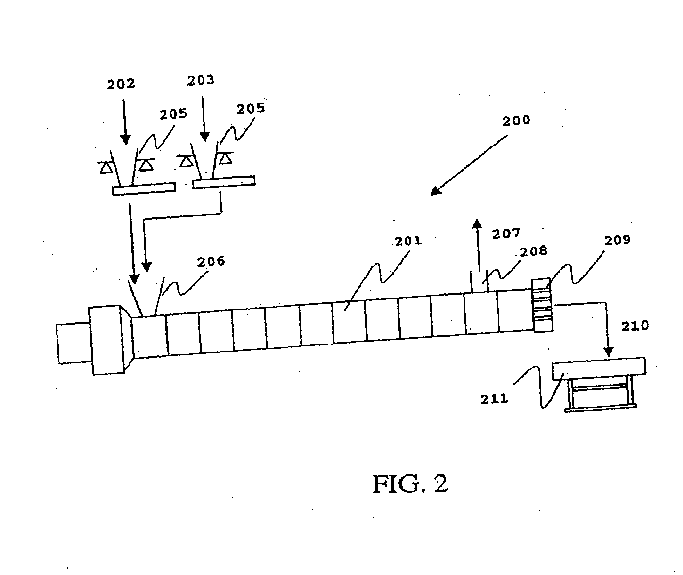

With reference to Fig. 2, the production plant (200) includes an extruder (201) suitable for carrying out the process for the preparation of the elastomeric polymer grafted with at least one phenolic resin according to the present invention. As schematically shown in Fig. 2, by means of feed hopper (206) the extruder (201) is fed with the compounds necessary for producing said grafted elastomeric polymer. Preferably, the extruder is a co-rotating twin screw extruder.

According to one embodiment, a previously made elastomeric polymer containing at least one functional group (such as, for example, a functional group derived from maleic anhydride or dithiodipropionic acid) (202) and a phenolic resin (203), are fed to the extruder through a feed hopper (206). Alternatively, the compounds may be fed to the extruder (201) through different feed hoppers (not represented in Fig. 2).

Each flow (202) and (203), is fed to the feed hopper (206) by means of different metering devices (205). Preferably said metering devices are loss-in-weight gravimetric feeders. Alternatively, each flow (202) and (203), may be fed to the feed hopper (206) by means of the same metering device (205) (not represented in Fig. 2).

Alternatively, the phenolic resin (203), may be in a molten state and may be injected to the extruder (201) by means of a gravimetrically controlled feeding pump (not represented in Fig. 2).

Alternatively, the elastomeric polymer, the at least one functionalized monomer (such as, for example, maleic anhydride or dithiodipropionic acid) and the phenolic resin, may be fed to the extruder (201) through a feed hopper (206) by means of a metering device (205) (not represented in Fig. 2).

Fig. 2 shows also a degassing unit schematically indicated by reference sign (208) from which a flow of the gases possibly generated during extrusion (207) exits.

The resulting elastomeric polymer grafted with at least one phenolic resin (210) is discharged from the extruder (201), e.g. in the form of a continuous strand, by pumping it through an extruder die (209) and is conveyed to a cooling device (211). A gear pump (not represented in Fig. 2) may be provided before said extruder die (209). After cooling, the resulting elastomeric polymer including at least one phenolic resin may be granulated by means of a grinding device (not represented in Fig. 2).

Alternatively, the elastomeric polymer grafted with at least one phenolic resin (210) is discharged from the extruder (201) in the form of a subdivided product by pumpimg it through an extruder die (209) which may be provided with a perforated die plate equipped with knives (not represented in Fig. 2). The obtained subdivided product may be, e.g. in a granular form, with an average diameter of the granules generally of from 0.5 mm to about 3 mm, preferably of from 1 mm to 2 mm, and a length generally of from about 1 mm to 4 mm, preferably of from 1.5 mm to 3 mm.

The present invention will be further illustrated below by means of a number of preparation examples, which are given for purely indicative purposes and without any limitation of this invention.

### EXAMPLE 1

### Preparation of the elastomeric polymer grafted with phenolic resin in a twin-screw extruder

The amounts of the components used are given in Table 1 (the amounts of the various components are given in phr).

**TABLE 1**

| EXAMPLE | 1 |
|---|---|
| IR-g-MAH | 100 |
| phenolic resin | 10 |

| | |
|---|---|
| IR-g-MAH: functionalized cis-1,4-polyisoprene obtained as below disclosed; phenolic resin: octylphenol-formaldehyde resin (SP-1068 - Schenectady International). | |

### (a) Preparation of IR-g-MAH

The cis-1-4-polyisoprene (SKI3 - Nizhnekamskneftechim Export) was obtained in the form of granules having an average particles size diameter of about 3 mm - 20 mm, by means of a rubber grinder. The so obtained granules (100 phr) and maleic anhydride (2 phr), also in a granular form, were fed to the feed hopper of a co-rotating twin-screw extruder having a nominal screw diameter of 40 mm and a L/D ratio of 48. The maximum temperature in the extruder was 220°C. The extrusion head was kept at a temperature of 100°C.

The obtained elastomeric polymer was discharged from the extruder in the form of a continuous strand, was cooled at room temperature (23°C) in a cooling device and granulated. A sample of the obtained elastomeric polymer was subjected to FTIR analysis below disclosed in order to evaluate the presence of the grafted maleic anhydride.

### FTIR analysis

A sample of the elastomeric polymer (0.5 g) was placed in a wire netting and compressed, at 15 tons, for 5 min, at 70°C, in a Carver Laboratory press, to obtain a supported thin layer of the elastomeric polymer. Subsequently, the obtained supported thin layer of the elastomeric polymer, was put in a ASE^{®} 100 Accelerated Solvent Extractor from Dionex in order to extract the non-grafted maleic anhydride. The extraction was carried out in an acetone solution, at a temperature of 120°C, at a pressure of 1500 psi, for a time of 20 min.

Subsequently, the extracted elastomeric polymer was dissolved in a dichloromethane solution to obtain a viscous solution which was spread onto a sodium chloride lamina. The spread lamina was heated, at 50°C, for 30 min, under vacuum, to obtain a supported thin film of the elastomeric polymer.

The obtained supported thin film of the elastomeric polymer, was subjected to FTIR analysis which was carried out by means of a Perkin-Elmer Spectrum One FTIR Spectrometer. The presence of a band at 1700 cm⁻¹ confirms the grafting of maleic anhydride.

### (b) Grafting of phenolic resin

The functionalized cis-1,4-polyisoprene (IR-g-MAH) obtained as above disclosed and the phenolic resin were fed to the feed hopper of a co-rotating twin-screw extruder having a nominal screw diameter of 40 mm and a L/D ratio of 48. The maximum temperature in the extruder was 180°C. The extrusion head was kept at a temperature of 90°C.

The obtained elastomeric polymer was discharged from the extruder in the form of a continuous strand, was cooled at room temperature (23°C) in a cooling device and granulated. A sample of the obtained elastomeric polymer was subjected to FTIR analysis below disclosed in order to evaluate the presence of the grafted phenolic resin.

### FTIR analysis

A sample of the elastomeric polymer (0.5 g) was placed in a wire netting and compressed, at 15 tons, for 5 min, at 70°C, in a Carver Laboratory press, to obtain a supported thin layer of the elastomeric polymer. Subsequently, the obtained supported thin layer of the elastomeric polymer, was put in a ASE^{®} 100 Accelerated Solvent Extractor from Dionex in order to extract the non-grafted phenolic resin. The extraction was carried out in an acetone solution, at a temperature of 120°C, at a pressure of 1500 psi, for a time of 20 min.

Subsequently, the extracted elastomeric polymer was dissolved in a dichloromethane solution to obtain a viscous solution which was spread onto a sodium chloride lamina. The spread lamina which was heated, at 50°C, for 30 min, under vacuum, to obtain a supported thin layer of the elastomeric polymer.

The obtained supported thin layer of the elastomeric polymer, was subjected to FTIR analysis which was carried out by means of a Perkin-Elmer Spectrum One FTIR Spectrometer. The presence of a band at 1700 cm⁻¹ confirms the grafting of maleic anhydride, while the presence of a broad band at 1250 cm⁻¹ - 1260 cm⁻¹ confirms the grafting of phenolic resin.

### EXAMPLES 2-4

### Preparation of the elastomeric compositions

The elastomeric compositions given in Table 2 were prepared as follows (the amounts of the various components are given in phr).

All the components, except accelerator (TBBS), retardant (PVI), and sulfur, were mixed together in an internal mixer (model Pomini PL 1.6) for about 5 min (1^{st} Step). As soon as the temperature reached 145±5°C, the elastomeric composition was discharged. The accelerator (TBBS), retardant (PVI), and sulfur, were then added and mixing was carried out in an open roll mixer (2^{nd} Step).

**TABLE 2**

| EXAMPLE | 2(*) | 3(*) | 4 |
|---|---|---|---|
| 1^{st} STEP | | | |
| IR | 100 | - | - |
| Vulcan^{®} 1345 | 50 | 50 | 50 |
| IR-g-MAH | - | 100 | - |
| Elastomeric polymer of Example 1 | - | - | 110 |
| Stearic acid | 2 | 2 | 2 |
| Wax | 1 | 1 | 1 |
| Phenolic resin | 10 | 10 | - |
| Polyplastol^{®} 6 | 2 | 2 | 2 |
| Zinc oxide | 3.5 | 3.5 | 3.5 |
| 6-PPD | 1 | 1 | 1 |
| TMQ | 1 | 1 | 1 |

| 2^{nd} STEP | | | |
|---|---|---|---|
| TBBS | 1.5 | 1.5 | 1.5 |
| PVI | 0.15 | 0.15 | 0.15 |
| Sulfur | 1.2 | 1.2 | 1.2 |

| | | | |
|---|---|---|---|
| (*): comparative. IR: cis-1,4-polyisoprene (SKI3 - Nizhnekamskneftechim Export); Vulcan^{®} 1345: carbon black (Cabot Corp.); IR-g-MAH: functionalized cis-1,4-polyisoprene obtained as disclosed in Example 1; Elastomeric polymer of Example 1: elastomeric polymer grafted with phenolic resin obtained as disclosed in Example 1; Wax: composition of microcrystalline wax (Antilux^{®} 654 - Lanxess); phenolic resin: octylphenol-formaldehyde resin (SP-1068 - Schenectady International); Polyplastol^{®} 6: mixture of zinc salts of fatty acids (palmitic acid, stearic acid and oleic acid being present in major amount) (Great Lakes Chemical Corp.); 6-PPD (antioxidant): N-(1,3-dimethylbutyl)-N'-p-phenylenediamine; TMQ (anti-ageing): polymerized 2,2,4-trimethyl'-1,2-dihydroquinoline (Vulcanox^{®} HS/LG - Lanxess); TBBS (accelerator): N-t-butyl-2-benzothiazyl-sulfenamide (Vulkacit^{®} NZ/ECG - Lanxess); PVI (retardant): N-(cyclohexylthio)phthalimide (Santogard PVI - Flexsys). | | | |

The static mechanical properties according to Standard ISO 37:1994 were measured on samples of the abovementioned elastomeric compositions vulcanized at 151°C, for 30 min. The results obtained are given in Table 3.

Table 3 also shows the dynamic mechanical properties, measured using an Instron dynamic device in the traction-compression mode according to the following methods. A test piece of the crosslinked elastomeric composition (vulcanized at 151°C, for 30 min) having a cylindrical form (length = 25 mm; diameter = 12 mm), compression-preloaded up to a 10% longitudinal deformation with respect to the initial length, and kept at the prefixed temperature (23°C, 70°C, or 100°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Finally, Table 3 also show the DIN abrasion: the data (expressed in mm³) correspond to the amount of elastomeric composition removed by operating under the standard conditions given in DIN standard 53516.

**TABLE 3**

| EXAMPLE | 2(*) | 3(*) | 4 |
|---|---|---|---|
| STATIC MECHANICAL PROPERTIES | | | |
| 50% Modulus (MPa) | 0.88 | 1.22 | 1.19 |
| 100% Modulus (MPa) | 1.28 | 1.92 | 1.99 |
| 300% Modulus. (MPa) | 5.98 | 9.58 | 10.45 |
| Stress at break (MPa) | 20.23 | 22.71 | 20.80 |
| Elongation at break (%) | 648.4 | 601.1 | 534.9 |

| DYNAMIC MECHANICAL PROPERTIES | | | |
|---|---|---|---|
| E'(23°C) | 5.566 | 6.887 | 6.500 |
| E'(70°C) | 3.814 | 4.940 | 4.668 |
| E'(100°C) | 3.351 | 4.019 | 4.043 |
| Tandelta (23°C) | 0.284 | 0.273 | 0.260 |
| Tandelta (70°C) | 0.226 | 0.210 | 0.188 |
| Tandelta (100°C) | 0.178 | 0.180 | 0.158 |
| DIN abrasion (mm³) | 183 | 145 | 131 |

| | | | |
|---|---|---|---|
| *: comparative. | | | |

### EXAMPLE 5

### Preparation of the elastomeric polymer grafted with phenolic resin in a twin-screw extruder

The amounts of the components used are given in Table 4 (the amounts of the various components are given in phr).

**TABLE 4**

| EXAMPLE | 5 |
|---|---|
| S-SBR-g-MAH | 100 |
| phenolic resin | 10 |

| | |
|---|---|
| SBR-g-MAH: functionalized solution styrene/1,3-butadiene copolymer obtained as below disclosed; phenolic resin: octylphenol-formaldehyde resin (SP-1068 - Schenectady International). | |

### (a) Preparation of S-SBR-q-MAH

The preparation of S-SBR-g-MAH was carried out as disclosed in Example 1 above reported, the only differences being the following:
- solution styrene/1,3-butadiene copolymer having a styrene content of 36% by weight and a vinyl content of 27.5% by weight, with respect to the total copolymer weight, and containing 37.5 phr of aromatic oil (HP752 - Japan Synthetic Rubber): 100 phr;
- maleic anhydride: 3 phr;
- extrusion head: kept at a temperature of 80°C.
A sample of the obtained elastomeric polymer was subjected to FTIR analysis below disclosed in order to evaluate the presence of the grafted maleic anhydride.

### FTIR analysis

A sample of the elastomeric polymer (0.5 g) was placed in a wire netting and compressed, at 15 tons, for 5 min, at 70°C, in a Carver Laboratory press, to obtain a supported thin layer of the elastomeric polymer. Subsequently, the obtained supported thin layer of the elastomeric polymer, was put in a ASE^{®} 100 Accelerated Solvent Extractor from Dionex in order to extract the non-grafted maleic anhydride. The extraction was carried out in a toluene:ethanol (30:70) solution, at a temperature of 130°C, at a pressure of 1500 psi, for a time of 20 min.

Subsequently, the extracted elastomeric polymer was dissolved in a dichloromethane solution to obtain a viscous solution which was spread onto a sodium chloride lamina. The spread lamina was heated, at 50°C, for 30 min, under vacuum, to obtain a supported thin layer of the elastomeric polymer.

The obtained supported thin layer of the elastomeric polymer, was subjected to FTIR analysis which was carried out by means of a Perkin-Elmer Spectrum One FTIR Spectrometer. The presence of a band at 1700 cm⁻¹ confirms the grafting of maleic anhydride.

### (b) Grafting of phenolic resin

The grafting of phenolic resin onto the functionalized solution stryrene-1,3-butadiene copolymer (S-SBR-g-MAH) obtained as above disclosed was carried out as disclosed in the Example 1 above reported.

A sample of the obtained elastomeric polymer was subjected to FTIR analysis below disclosed in order to evaluate the presence of the grafted phenolic resin.

### FTIR analysis

A sample of the elastomeric polymer (0.5 g) was placed in a wire netting and compressed, at 15 tons, for 5 min, at 70°C, in a Carver Laboratory press, to obtain a supported thin layer of the elastomeric polymer. Subsequently, the obtained supported thin layer of the elastomeric polymer, was put in a ASE^{®} 100 Accelerated Solvent Extractor from Dionex in order to extract the non-grafted phenolic resin. The extraction was carried out in a toluene:ethanol (30:70) solution, at a temperature of 130°C, at a pressure of 1500 psi, for a time of 20 min.

Subsequently, the extracted elastomeric polymer was dissolved in a dichloromethane solution to obtain a viscous solution which was spread onto a sodium chloride lamina. The spread lamina was heated, at 50°C, for 30 min, under vacuum, to obtain a supported thin layer of the elastomeric polymer.

The obtained supported thin layer of the elastomeric polymer, was subjected to FTIR analysis which was carried out by means of a Perkin-Elmer Spectrum One FTIR Spectrometer. The presence of a band at 1700 cm⁻¹ confirms the grafting of maleic anhydride, while the presence of a broad band at 1250 cm⁻¹ - 1260 cm⁻¹ confirms the grafting of phenolic resin.

### EXAMPLES 6-8

### Preparation of the elastomeric compositions

The elastomeric compositions given in Table 5 were prepared as follows (the amounts of the various components are given in phr).

All the components, except accelerators (CBS and DPG80) and sulfur, were mixed together in an internal mixer (model Pomini PL 1.6) for about 5 min (1^{st} Step). As soon as the temperature reached 145±5°C, the elastomeric composition was discharged. The accelerator (CBS and DPG80) and sulfur, were then added and mixing was carried out in an open roll mixer (2^{nd} Step).

**TABLE 5**

| EXAMPLE | 6(*) | 7(*) | 8 |
|---|---|---|---|
| 1^{st} STEP | | | |
| S-SBR | 72 | - | - |
| STR20 | 8 | 8 | 8 |
| BR | 20 | 20 | 20 |
| HV 3396 | 30 | 30 | 30 |
| S-SBR-g-MAH | - | 72 | - |
| Elastomeric polymer of Example 5 | - | - | 79.2 |
| X50S^{®} | 5 | 5 | 5 |
| Aromatic oil | 4 | 4 | 4 |
| Polyplastol^{®} 6 | 2 | 2 | 2 |
| Zeosil^{®} MP 1165 | 30 | 30 | 30 |
| Stearic acid | 2 | 2 | 2 |
| Wax | 1 | 1 | 1 |
| TMQ | 1 | 1 | 1 |
| Phenolic resin | 7.2 | 7.2 | - |
| Zinc oxide | 2.5 | 2.5 | 2.5 |
| 6-PPD | 2 | 2 | 2 |

| 2^{nd} STEP | | | |
|---|---|---|---|
| CBS | 1.2 | 1.2 | 1.2 |
| DPG80 | 2.36 | 2.36 | 2.36 |
| Sulfur | 1.2 | 1.2 | 1.2 |

| | | | |
|---|---|---|---|
| (*): comparative. S-SBR: solution styrene/1,3-butadiene copolymer having a styrene content of 36% by weight and a vinyl content of 27.5% by weight, with respect to the total copolymer weight and containing 37.5 phr of aromatic oil (HP752 - Japan Synthetic Rubber); STR20: natural rubber (SRI Trang Agroindustry); BR: polybutadiene (Europrene Neocis^{®} - Polimeri Europa); HV 3396: carbon black (Columbian); S-SBR-g-MAH: functionalized solution styrene/1,3-butadiene copolymer obtained as disclosed in Example 5; Elastomeric polymer of Example 5: elastomeric polymer grafted with a phenolic resin obtained as disclosed in Example 5; X50S^{®}: silane coupling agent comprising 50% by weight of carbon black and 50% by weight of bis(3-triethoxysilylpropyl)tetrasulphide (Degussa-Hüls) ; Polyplastol^{®} 6: mixture of zinc salts of fatty acids (palmitic acid, stearic acid and oleic acid being present in major amount) (Great Lakes Chemical Corp.); Zeosil^{®} MP 1165: silica (Rhodia); Wax: composition of microcrystalline wax (Antilux^{®} 654 - Lanxess); TMQ (anti-ageing): polymerized 2,2,4-trimethyl-1,2-dihydroquinoline (Vulcanox^{®} HS/LG - Lanxess); phenolic resin: octylphenol-formaldehyde resin (SP-1068 - Schenectady International); 6-PPD (antioxidant): N-(1,3-dimethylbutyl)-N'-p-phenylenediamine; CBS (accelerator): N-cyclohexyl-2-benzothiazyl-sulphenamide (Vulkacit^{®} CZ/C - Lanxess); DPG80 (accelerator): diphenyl guanidine (Rhenogran^{®} DPG80 - Rhein Chemie). | | | |

The static mechanical properties according to Standard ISO 37:1994 were measured on samples of the abovementioned elastomeric compositions vulcanized at 170°C, for 10 min. The results obtained are given in Table 6.

Table 6 also shows the dynamic mechanical properties, measured using an Instron dynamic device in the traction-compression mode according to the following methods. A test piece of the crosslinked elastomeric composition (vulcanized at 170°C, for 10 min) having a cylindrical form (length = 25 mm; diameter = 12 mm), compression-preloaded up to a 10% longitudinal deformation with respect to the initial length, and kept at the prefixed temperature (23°C, 70°C, or 100°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Finally, Table 6 also show the DIN abrasion: the data (expressed in mm³) correspond to the amount of elastomeric composition removed by operating under the standard conditions given in DIN standard 53516.

**TABLE 6**

| EXAMPLE | 6(*) | 7(*) | 8 |
|---|---|---|---|
| STATIC MECHANICAL PROPERTIES | | | |
| 50% Modulus (MPa) | 1.16 | 1.18 | 1.24 |
| 100% Modulus (MPa) 300% Modulus (MPa) | 1.84 7.89 | 1.83 7.38 | 2.10 9.22 |
| Stress at break (MPa) | 17.69 | 17.79 | 19.11 |
| Elongation at break (%) | 595.2 | 632.8 | 584.3 |

| DYNAMIC MECHANICAL PROPERTIES | | | |
|---|---|---|---|
| E'(23°C) | 9.757 | 10.524 | 9.936 |
| E'(70°C) | 5.169 | 5.912 | 5.685 |
| E'(100°C) | 4.372 | 4.492 | 4.686 |
| Tandelta (23°C) | 0.399 | 0.419 | 0.407 |
| Tandelta (70°C) | 0.237 | 0.268 | 0.233 |
| Tandelta (100°C) | 0.184 | 0.199 | 0.170 |
| DIN abrasion (mm³) | 101 | 107 | 92 |

| | | | |
|---|---|---|---|
| *: comparative. | | | |

### EXAMPLE 9

### Preparation of the elastomeric polymer grafted with phenolic resin in a twin-screw extruder

The amounts of the components used are given in Table 7 (the amounts of the various components are given in phr) .

**TABLE 7**

| EXAMPLE | 9 |
|---|---|
| S-SBR-g-MAH | 100 |
| phenolic resin | 10 |

| | |
|---|---|
| SBR-g-MAH: functionalized solution styrene/1,3-butadiene copolymer obtained as below disclosed; phenolic resin: octylphenol-formaldehyde resin containing methylol groups (SP-1045 - Schenectady International). | |

### (a) Preparation of S-SBR-g-MAH

The preparation of the S-SBR-g-MAH was carried as disclosed in Example 1 above reported, the only differences being the following:
- solution styrene/1,3-butadiene having a styrene content of 25% by weight and a vinyl content of 47% by weight, with respect to the total copolymer weight, and containing 37.5 phr of TDAE oil (SE SLR-4630 - Dow Chemical): 100 phr;
- maximum temperature in the extruder: 180°C;
- extrusion head: kept at a temperature of 80°C.

A sample of the obtained elastomeric polymer was subjected to FTIR analysis. The FTIR analysis was carried out as disclosed in Example 5 above reported. The presence of a band at 1700 cm⁻¹ confirms the grafting of maleic anhydride.

### (b) Grafting of phenolic resin

The grafting of phenolic resin onto the functionalized solution styrene/1,3-butadiene copolymer (S-SBR-g-MAH) obtained as above disclosed was carried out as disclosed in Example 1 above reported the only difference being the following:
- extrusion head: kept at a temperature of 80°C.

A sample of the obtained elastomeric polymer was subjected to FTIR analysis. The FTIR analysis was carried out as disclosed in Example 5 above reported. The presence of a band at 1700 cm⁻¹ confirms the grafting of maleic anhydride, while the presence of a broad band at 1250 cm⁻¹ - 1260 cm⁻¹ confirms the grafting of phenolic resin.

### EXAMPLES 10-12

### Preparation of the elastomeric compositions

The elastomeric compositions given in Table 8 were prepared as follows (the amounts of the various components are given in phr).

All the components, except accelerator (CBS, DPG80) and sulfur, were mixed together in an internal mixer (model Pomini PL 1.6) for about 5 min (1^{st} Step). As soon as the temperature reached 145±5°C, the elastomeric composition was discharged. The accelerators (CBS and DPG80) and sulfur, were then added and mixing was carried out in an open roll mixer (2^{nd} Step).

**TABLE 8**

| EXAMPLE | 10(*) | 11(*) | 12 |
|---|---|---|---|
| 1^{st} STEP | | | |
| S-SBR | 72 | - | - |
| STR20 | 8 | 8 | 8 |
| BR | 20 | 20 | 20 |
| HV 3396 | 30 | 30 | 30 |
| S-SBR-g-MAH | - | 72 | - |
| Ealstomeric polymer of Example 9 | - | - | 79.2 |
| X50S^{®} | 5 | 5 | 5 |
| Aromatic oil | 4 | 4 | 4 |
| Polyplastol^{®} 6 | 2 | 2 | 2 |
| Zeosil^{®} MP 1165 | 30 | 30 | 30 |
| Stearic acid | 2 | 2 | 2 |
| Wax | 1 | 1 | 1 |
| TMQ | 1 | 1 | 1 |
| Phenolic resin | 7.2 | 7.2 | - |
| Zinc oxide | 2.5 | 2.5 | 2.5 |
| 6-PPD | 2 | 2 | 2 |

| 2^{nd} STEP | | | |
|---|---|---|---|
| CBS | 1.2 | 1.2 | 1.2 |
| DPG 80 | 2.36 | 2.36 | 2.36 |
| Sulfur | 1.2 | 1.2 | 1.2 |

| | | | |
|---|---|---|---|
| (*): comparative. S-SBR: solution styrene/1,3-butadiene copolymer, having a styrene content of 25% by weight and a vinyl content of 47% by weight, with respect to the total copolymer weight, and containing 37.5 phr of TDAE oil (SE SLR-4630 - Dow Chemical); STR20: natural rubber (SRI Trang Agroindustry); BR: polybutadiene (Europrene Neocis^{®} - Polimeri Europa); HV 3396: carbon black (Columbian); S-SBR-g-MAH: functionalized solution styrene/1,3-butadiene copolymer obtained as disclosed in Example 9; Elastomeric polymer of Example 9: elastomeric polymer grafted with a phenolic resin obtained as disclosed in Example 9; X50S^{®}: silane coupling agent comprising 50% by weight of carbon black and 50% by weight of bis(3-triethoxysilylpropyl)tetrasulphide (Degussa-Hüls) ; Polyplastol^{®} 6: mixture of zinc salts of fatty acids (palmitic acid, stearic acid and oleic acid being present in major amount) (Great Lakes Chemical Cop.); Zeosil^{®} MP 1165: silica (Rhodia); Wax: composition of microcrystalline wax (Antilux^{®} 654 - Lanxess); TMQ (anti-ageing): polymerized 2,2,4-trimethyl-1,2-dihydroquinoline (Vulcanox^{®} HS/LG - Lanxess) ; phenolic resin: octylphenol-formaldehyde resin containing methylol groups (SP-1045 - Schenectady International); 6-PPD (antioxidant): N-(1,3-dimethylbutyl)-N'-p-phenylenediamine; CBS (accelerator): N-cyclohexyl-2-benzothiazyl-sulphenamide (Vulkacit^{®} CZ/C - Lanxess); DPG80 (accelerator): diphenyl guanidine (Rhenogran^{®} DPG80 - Rhein Chemise). | | | |

The static mechanical properties, the dynamic mechanical properties, as well as the DIN abrasion, were measured as disclosed in Example 5 above reported. The results obtained are given in Table 9.

**TABLE 9**

| EXAMPLE | 10 (*) | 11(*) | 12 |
|---|---|---|---|
| STATIC MECHANICAL PROPERTIES | | | |
| 50% Modulus (MPa) | 0.92 | 0.91 | 0.92 |
| 100% Modulus (MPa) | 1.25 | 1.19 | 1.35 |
| 300% Modulus (MPa) | 4.23 | 3.73 | 5.06 |
| Stress at break (MPa) | 15.64 | 15.47 | 16.60 |
| Elongation at break (%) | 767.9 | 725.3 | 811.0 |

| DYNAMIC MECHANICAL PROPERTIES | | | |
|---|---|---|---|
| E' (23°C) | 8.151 | 8.951 | 7.993 |
| E' (70°C) | 4.639 | 5.025 | 4.588 |
| E' (100°C) | 3.909 | 4.119 | 3.869 |
| Tandelta (23°C) | 0.399 | 0.405 | 0.401 |
| Tandelta (70°C) | 0.244 | 0.256 | 0.239 |
| Tandelta (100°C) | 0.181 | 0.196 | 0.173 |
| DIN abrasion (mm³) | 190 | 226 | 182 |

| | | | |
|---|---|---|---|
| (*) comparative. | | | |

### EXAMPLE 13

### Preparation of the elastomeric polymer grafted with phenolic resin in a twin-screw extruder

The amounts of the components used are given in Table 10 (the amounts of the various components are given in phr).

**TABLE 10**

| EXAMPLE | 13 |
|---|---|
| S-SBR-g-DTDP | 100 |
| phenolic resin | 10 |

| | |
|---|---|
| S-SBR-g-DTDP: functionalized solution styrene/1,3-butadiene copolymer obtained as below disclosed; phenolic resin: octylphenol-formaldehyde resin (SP-1068 - Schenectady International). | |

### (a) Preparation of S-SBR-g-DTDP

The preparation of S-SBR-g-DTDP was carried out as disclosed in Example 1 above reported, the only differences being the following:
- solution styrene/1,3-butadiene copolymer having a styrene content of 36% by weight and a vinyl content of 27.5% by weight, with respect to the total copolymer weight, and containing 37.5 phr of aromatic oil (HP752 - Japan Synthetic Rubber): 100 phr;
- dithiodipropionic acid: 3 phr;
- maximum temperature in the extruder: 180°C;
- extrusion head: kept at a temperature of 80°C.

A sample of the obtained elastomeric polymer was subjected to ¹H-NMR analysis below disclosed in order to evaluate the presence of the grafted dithiodipronic acid.
¹H-NMR analysis

A sample of the elastomeric polymer (0.5 g) was placed in a wire netting and compressed, at 15 tons, for 5 min, at 70°C, in a Carver Laboratory press, to obtain a supported thin layer of the elastomeric polymer. Subsequently, the obtained supported thin layer of the elastomeric polymer, was put in a ASE^{®} 100 Accelerated Solvent Extractor from Dionex in order to extract the non-grafted dithiodipropionic acid. The extraction was carried out in a toluene:ethanol (30:70) solution, at a temperature of 130°C, at a pressure of 1500 psi, for a time of 20 min.

Subsequently, the extracted elastomeric polymer was dissolved in a dichloromethane solution and subsequently treated with a diazomethane in order to perform the esterification (methylation) of the acid group.

The obtained compound was subjected to proton nuclear magnetic resonance (¹H-NMR) analysis which was carried out on Bruker 400 MHz instruments operating at the following conditions:
- CDCl₃ solution;
- temperature of 25°C;
- 64 scans with a delay of 3 sec.

The grafting of dithiodipropionic acid was confirmed by the presence of signals at 2.95 ppm (α), 2.80 ppm (β) and 3.7 ppm (γ) [-SCH₂(β)CH₂(α)COOCH₃(γ)].

### (b) Grafting of phenolic resin

The grafting of phenolic resin onto the functionalized solution styrene/1,3-butadiene copolymer (S-SBR-g-DTDP) obtained as above disclosed, was carried out as disclosed in Example 1 above reported, the only difference being the following:
- extrusion head: kept at a temperature of 80°C.

A sample of the obtained elastomeric polymer was subjected to ¹H-NMR analysis below disclosed in order to evaluate the presence of the grafted phenolic resin.
1H-NMR analysis

A sample of the elastomeric polymer (0.5 g) was placed in a wire netting and compressed, at 15 tons, for 5 min, at 70°C, in a Carver Laboratory press, to obtain a supported thin layer of the elastomeric polymer. Subsequently, the obtained supported thin layer of the elastomeric polymer, was put in a ASE^{®} 100 Accelerated Solvent Extractor from Dionex in order to extract the non-grafted phenolic resin. The extraction was carried out in a toluene:ethanol (30:70) solution, at a temperature of 130°C, at a pressure of 1500 psi, for a time of 20 min.

Subsequently, the extracted elastomeric polymer was dissolved in a dichloromethane solution and subsequently treated with a diazomethane in order to perform the esterification (methylation) of the acid group.

The obtained compound was subjected to proton nuclear magnetic resonance (¹H-NMR) analysis which was carried out on Bruker 400 MHz instruments operating at the following conditions:
- CDCl₃ solution;
- temperature of 25°C;
- 64 scans with a delay of 3 sec.

The grafting of dithiodipropionic acid was confirmed by the presence of signals at 2.95 ppm (α), 2.80 ppm (β) and 3.7 ppm (γ) [-SCH₂(β)CH₂(α)-COOCH₃(γ)], while the grafting of the phenolic resin was confirmed by the presence of a signal at 3.8 ppm [methylene (-CH₂-) group linked to phenolic group).

### EXAMPLES 14-16

### Preparation of the elastomeric compositions

The elastomeric compositions given in Table 11 were prepared as follows (the amounts of the various components are given in phr).

All the components, except accelerator (CBS, DPG80) and sulfur, were mixed together in an internal mixer (model Pomini PL 1.6) for about 5 min (1^{st} Step). As soon as the temperature reached 145±5°C, the elastomeric composition was discharged. The accelerators (CBS and DPG80) and sulfur, were then added and mixing was carried out in an open roll mixer (2^{nd} Step).

**TABLE 11**

| EXAMPLE | 14(*) | 15(*) | 16 |
|---|---|---|---|
| 1^{st} STEP | | | |
| S-SBR | 72 | - | - |
| STR20 | 8 | 8 | 8 |
| BR | 20 | 20 | 20 |
| HV 3396 | 30 | 30 | 30 |
| S-SBR-g-DTDP | - | 72 | - |
| Elastomeric polymer of Example 13 | - | - | 79.2 phr |
| DTDP | 2.1 | - | - |
| X50S^{®} | 5 | 5 | 5 |
| Polyplastol^{®} 6 | 2 | 2 | 2 |
| Zeosil^{®} MP 1165 | 30 | 30 | 30 |
| Stearic acid | 2 | 2 | 2 |
| Wax | 1 | 1 | 1 |
| TMQ | 1 | 1 | 1 |
| Phenolic resin | 7.2 | 7.2 | - |
| Zinc oxide | 2.5 | 2.5 | 2.5 |
| 6-PPD | 2 | 2 | 2 |

| 2^{nd} STEP | | | |
|---|---|---|---|
| CBS | 1.2 | 1.2 | 1.2 |
| DPG 80 | 2.36 | 2.36 | 2.36 |
| Sulfur | 1.2 | 1.2 | 1.2 |

| | | | |
|---|---|---|---|
| (*): comparative. S-SBR: solution styrene/1,3-butadiene copolymer having a styrene content of 36% by weight and a vinyl content of 27.5% by weight, with respect to the total copolymer weight, and containing 37.5 phr of aromatic oil (HP752 - Japan Synthetic Rubber); STR20: natural rubber (SR Trang Agroindustry); BR: polybutadiene (Europrene Neocis^{®} - Polimeri Europa); HV 3396: carbon black (Columbian); S-SBR-g-DTDP: functionalized solution styrene/1,3-butadiene copolymer obtained as disclosed in Example 13; Elastomeric polymer of Example 13: elastomeric polymer grafted with dithiodipropionic acid obtained as disclosed in Example 13; DTDP: dithiodipropionic acid; X50S^{®}: silane coupling agent comprising 50% by weight of carbon black and 50% by weight of bis(3-triethoxysilylpropyl)tetrasulphide (Degussa-Hüls); Polyplastol^{®} 6: mixture of zinc salts of fatty acids (palmitic acid, stearic acid and oleic acid being present in major amount) (Great Lakes Chemical Corp.); Zeosil^{®} 1165: silica (Rhodia); Wax: composition of microcrystalline wax (Antilux^{®} 654 - Lanxess); TMQ (anti-ageing): polymerized 2,2,4-trimethyl-1,2-dihydroquinoline (Vulcanox^{®} HS/LG - Lanxess); phenolic resin: octylphenol-formaldehyde resin (SP-1068 - Schenectady International); 6-PPD (antioxidant): N-(1,3-dimethylbutyl)-N'-p-phenylenediamine; CBS (accelerator): N-cyclohexyl-2-benzothiazyl-sulphenamide (Vulkacit^{®} CZ/C - Lanxess); DPG80 (accelerator):diphenyl guanidine (Rhenogran^{®} DPG80 - Rhein Chemie). | | | |

The static mechanical properties, the dynamic mechanical properties, as well as the DIN abrasion, were measured as disclosed in Example 5 above reported. The results obtained are given in Table 12.

**TABLE 12**

| EXAMPLE | 14(*) | 15(*) | 16 |
|---|---|---|---|
| STATIC MECHANICAL PROPERTIES | | | |
| 50% Modulus (MPa) | 1.58 | 1.73 | 1.64 |
| 100% Modulus (MPa) | 2.37 | 2.63 | 2.54 |
| 300% Modulus (MPa) | 8.87 | 9.75 | 10.00 |
| Stress at break (MPa) | 18.06 | 16.47 | 18.97 |
| Elongation at break (%) | 565.5 | 725.3 | 811.0 |

| DYNAMIC MECHANICAL PROPERTIES | | | |
|---|---|---|---|
| E'(23°C) | 13.300 | 14.090 | 13.960 |
| E'(70°C) | 7.200 | 7.580 | 7.540 |
| E'(100°C) | 6.218 | 6.412 | 6.473 |
| Tandelta (23°C) | 0.394 | 0.397 | 0.394 |
| Tandelta (70°C) | 0.262 | 0.276 | 0.262 |
| Tandelta (100°C) | 0.227 | 0.231 | 0.225 |
| DIN abrasion (mm³) | 90 | 95 | 85 |

| | | | |
|---|---|---|---|
| (*) comparative. | | | |

## Claims

1. Tire comprising at least one structural element including a crosslinked elastomeric material obtained by crosslinking a crosslinkable elastomeric composition comprising a crosslinkable elastomeric base comprising at least 30 phr of at least one elastomeric polymer grafted with at least one phenolic resin.

2. Tire according to claim 1, wherein said crosslinkable elastomeric base comprises from 50 phr to 100 phr of at least one elastomeric polymer grafted with at least one phenolic resin.

3. Tire according to claim 1 or 2, comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is a tread band.

4. Tire according to any one of the preceding claims, wherein said at least one phenolic resin is grafted directly onto the elastomeric polymer.

5. Tire according to any one of claims 1 to 3, wherein said at least one phenolic resin is grafted onto the elastomeric polymer through at least one functional group.

6. Tire according to any one of the preceding claims, wherein said elastomeric polymer grafted with at least one phenolic resin has a weight average molecular weight (M_{w}) not lower than 80,000.

7. Tire according to any one of the preceding claims, wherein said elastomeric polymer grafted with at least one phenolic resin has a Mooney viscosity ML(1+4) not lower than 40.

8. Tire according to any one of the preceding claims, wherein said phenolic resin is grafted onto the elastomeric polymer by means of a process comprising:
- feeding at least one elastomeric polymer and at least one phenolic resin into at least one extruder comprising: a housing including at least one feed opening and a discharge opening and at least one screw rotatably mounted in said housing;
- mixing and softening said mixture so as to obtain an elastomeric polymer grafted with at least one phenolic resin;
- discharge the elastomeric polymer obtained in the above step through the discharge opening.

9. Tire according to claim 8, wherein said elastomeric polymer contains at least one functional group.

10. Tire according to any one of claims 1 to 7, wherein said phenolic resin is grafted onto said elastomeric polymer by means of a process comprising:
- feeding at least one elastomeric polymer, at least one functionalized monomer, and at least one phenolic resin, into at least one extruder comprising: a housing including at least one feed opening and a discharge opening, and at least one screw rotatably mounted in said housing;
- mixing and softening said mixture so as to obtain an elastomeric polymer grafted with at least one phenolic resin;
- discharging the elastomeric polymer obtained in the above step through the discharge opening.

11. Tire according to any one of the preceding claims, wherein said at least one phenolic resin is selected from:
- novolak-type phenolic resins or resol-type phenolic resins obtained from the reaction of a phenolic compound such as phenol, alkyl substituted phenol, arylalkyl or alkylaryl substituted phenol, resorcinol, alkyl substituted resorcinol, arylalkyl or alkylaryl substituted resorcinol, or mixtures thereof, with an aldehyde such as formaldehyde, p-formaldehyde, butyraldehyde, benzaldehyde, salicylaldehyde, acetaldehyde, propionaldehyde, crotonaldehyde, butyraldehyde, iso-butyraldehyde, n-valer-aldehyde, crotonaldehyde, cinnamaldehyde, or mixtures thereof;
- phenolic resins obtained from the reaction of alkyl substituted phenol and acetylene such as p-t-butylphenol-acetylene resin;
- substituted melamine resins such as N-substituted oxymethylmelamine resins;
- terpene phenolic resins obtained by alkylating phenolic compounds with terpene hydrocarbons.

12. Tire according to claim 11, wherein said phenolic resin is selected from novolak-type phenolic resins, resol-type phenolic resins, or mixtures thereof.

13. Tire according to claim 11 or 12, wherein the novolak-type phenolic resins, or resol-type phenolic resins, are selected from: octylphenol-formaldehyde resin, octylphenol-formaldehyde resin containing methylol groups, or mixture thereof.

14. Tire according to claim 5 or 9, wherein said at least one functional group is selected from: carboxylic groups; carboxylate groups; anhydride groups; ester groups, or mixtures thereof.

15. Tire according to claim 14, wherein said at least one functional group is introduced into the elastomeric polymer by means of a process comprising:
- feeding at least one elastomeric polymer and at least one functionalized monomer into at least one extruder comprising: a housing including at least one feed opening and a discharge opening, and at least one screw rotatably mounted in said housing;
- mixing and softening said mixture so as to obtain an elastomeric polymer including at least one functional group;
- discharging the elastomeric polymer obtained in the above step through the discharge opening.

16. Tire according to claim 10 or 15, wherein said at least one functionalized monomer is selected from monocarboxylic or dicarboxylic acids, or derivatives thereof, such as salts, anhydrides or esters.

17. Tire according to claim 16, wherein said monocarboxylic or dicarboxylic acids, or derivatives thereof are: maleic acid, fumaric acid, citraconic acid, itaconic acid, acrylic acid, methacrylic acid, dithiodisuccinic acid, dithiodipropionic acid, and salts, anhydrides or esters derived therefrom, or mixtures thereof.

18. Tire according to any one of the preceding claims, wherein the elastomeric polymer utilized in the production of said elastomeric polymer grafted with at least one phenolic resin is selected from sulfur-crosslinkable elastomeric polymer or copolymers with an unsaturated chain having a glass transition temperature below 20°C.

19. Tire according to any one of the preceding claims, wherein said crosslinkable elastomeric base comprises at least one second elastomeric polymer in an amount not higher than 70 phr.

20. Tire according to claim 19, wherein said crosslinkable elastomeric base comprises at least one second elastomeric polymer in an amount of from 0 phr to 50 phr.

21. Tire according to claim 19 or 20, wherein said at least one second elastomeric polymer is selected from:
- natural or synthetic cis-1,4-polyisoprene, 3,4-polyisoprene, polybutadiene, optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof;
- ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

## Patentansprüche

1. Reifen, umfassend mindestens ein Strukturelement, enthaltend ein vernetztes elastomeres Material, das durch Vernetzen einer vernetzbaren elastomeren Zusammensetzung erhalten wird, die eine vernetzbare elastomere Basis, umfassend mindestens 30 phr von mindestens einem mit mindestens einem Phenolharz aufgepfropften elastomeren Polymer, umfasst.

2. Reifen gemäss Anspruch 1, worin die vernetzbare elastomere Basis 50 bis 100 phr von mindestens einem mit mindestens einem Phenolharz aufgepfropften elastomeren Polymer, umfasst.

3. Reifen gemäss Anspruch 1 oder 2, umfassend:
- eine Karkassenstruktur von im wesentlichen ringförmiger Form mit gegenüberliegenden Seitenkanten, die mit entsprechenden rechtsseitigen und linksseitigen Wulststrukturen verbunden sind, wobei die Wulststrukturen mindestens einen Wulstkern und mindestens einen Wulstfüller umfassen;
- eine in bezug auf die Karkassenstruktur in einer radialen äusseren Position aufgebrachte Gürtelstruktur;
- ein auf der Gürtelstruktur überlagertes Laufflächenband;
- ein seitlich an gegenüberliegenden Seiten in bezug auf die Karkassenstruktur aufgebrachtes Seitenwandpaar,
worin das Strukturelement ein Laufflächenband ist.

4. Reifen gemäss mindestens einem der vorhergehenden Ansprüche, worin das mindestens eine Phenolharz direkt auf dem elastomeren Polymer aufgepfropft ist.

5. Reifen gemäss mindestens einem der Ansprüche 1 bis 3, worin das mindestens eine Phenolharz durch mindestens eine funktionelle Gruppe auf dem elastomeren Polymer aufgepfropft wird.

6. Reifen gemäss mindestens einem der vorhergehenden Ansprüche, worin das mit mindestens einem Phenolharz aufgepfropfte elastomere Polymer ein gewichtsgemitteltes Molekulargewicht (Mw) von weniger als 80.000 aufweist.

7. Reifen gemäss mindestens einem der vorhergehenden Ansprüche, worin das mit mindestens einem Phenolharz aufgepfropfte elastomere Polymer eine Mooney-Viskosität ML(1+4) von weniger als 40 aufweist.

8. Reifen gemäss mindestens einem der vorhergehenden Ansprüche, worin das Phenolharz auf dem elastomeren Polymer durch ein Verfahren aufgepfropft wird, das folgendes umfasst:
- Einspeisen von mindestens einem elastomeren Polymer und mindestens einem Phenolharz in mindestens einen Extruder, umfassend: ein Gehäuse, enthaltend mindestens eine Einspeiseöffnung und mindestens eine Abführöffnung und mindestens eine in dem Gehäuse drehbar gelagerte Schnecke;
- Mischen und Erweichen der Mischung, so dass ein mit mindestens einem Phenolharz aufgepfropftes elastomeres Polymer erhalten wird;
- Abführen des im obigen Schritt erhaltenen elastomeren Polymers durch die Abführöffnung.

9. Reifen gemäss Anspruch 8, worin das elastomere Polymer mindestens eine funktionelle Gruppe enthält.

10. Reifen gemäss mindestens einem der Ansprüche 1 bis 7, worin das Phenolharz auf das elastomere Polymer mittels eines Verfahrens aufgepfropft wird, das folgendes umfasst:
- Einspeisen von mindestens einem elastomeren Polymer, mindestens einem funktionalisierten Monomer und mindestens einem Phenolharz in mindestens einen Extruder, umfassend: ein Gehäuse, enthaltend mindestens eine Einspeiseöffnung und eine Abführöffnung und mindestens eine in dem Gehäuse drehbar gelagerte Schnecke;
- Mischen und Erweichen der Mischung, so dass ein mit mindestens einem Phenolharz aufgepfropftes elastomeres Polymer erhalten wird;
- Abführen des im obigen Schritt erhaltenen elastomeren Polymers durch die Abführöffnung.

11. Reifen gemäss mindestens einem der vorhergehenden Ansprüche, worin das mindestens eine Phenolharz aus den folgenden ausgewählt wird:
- Phenolharzen vom Novolak-Typ oder Phenolharzen vom Resol-Typ, die aus der Reaktion einer phenolischen Verbindung, wie z.B. Phenol, Alkyl-substituiertem Phenol, Arylalkyl- oder Alkylaryl-substituiertem Phenol, Resorcinol, Alkyl-substituiertem Resorcinol, Arylalkyl- oder Alkylaryl-substituiertem Resorcinol oder Mischungen davon mit einem Aldehyd, wie z.B. Formaldehyd, p-Formaldehyd, Butyraldehyd, Benzaldehyd, Salicylaldehyd, Acetaldehyd, Propionaldehyd, Crotonaldehyd, Butyraldehyd, Isobutyraldehyd, n-Valeraldehyd, Crotonaldehyd, Cinnamaldehyd oder Mischungen davon, erhalten werden;
- Phenolharzen, die aus der Reaktion von Alkyl-substituiertem Phenol und Acetylen erhalten werden, wie z.B. p-t-Butylphenol-Acetylen-Harz;
- substituierten Melaminharzen, wie z.B. N-substituierten Oxymethylmelaminharzen;
- Terpenphenolharzen, die durch Alkylieren von phenolischen Verbindungen mit Terpen-Kohlenwasserstoffen erhalten werden.

12. Reifen gemäss Anspruch 11, worin das Phenolharz aus Phenolharzen vom Novolak-Typ, Phenolharzen vom Resol-Typ oder Mischungen davon ausgewählt wird.

13. Reifen gemäss Anspruch 11 oder 12, worin die Phenolharze vom Novolak-Typ oder die Phenolharze von Resol-Typ ausgewählt werden aus: Octylphenol-Formaldehyd-Harz, Octylphenol-Formaldehyd-Harz, das Methylolgruppen enthält, oder Mischungen davon.

14. Reifen gemäss Anspruch 5 oder 9, worin die mindestens eine funktionelle Gruppe ausgewählt wird aus:
Carboxylgruppen, Carboxylatgruppen, Anhydridgruppen, Estergruppen oder Mischungen davon.

15. Reifen gemäss Anspruch 14, worin die mindestens eine funktionelle Gruppe in das elastomere Polymer mittels eines Verfahrens eingeführt wird, das folgendes umfasst:
- Einspeisen von mindestens einem elastomeren Polymer und mindestens einem funktionalisierten Monomer in mindestens einen Extruder, umfassend: ein Gehäuse, enthaltend mindestens eine Einspeiseöffnung und eine Abführöffnung und mindestens eine in dem Gehäuse drehbar gelagerte Schnecke;
- Mischen und Erweichen der Mischung, so dass ein elastomeres Polymer, enthaltend mindestens eine funktionelle Gruppe, erhalten wird;
- Abführen des im obigen Schritt erhaltenen elastomeren Polymers durch die Abführöffnung.

16. Reifen gemäss Anspruch 10 oder 15, worin das mindestens eine funktionalisierte Monomer aus Monocarbonsäuren oder Dicarbonsäuren oder Derivaten davon, wie Salzen, Anhydriden oder Estern, ausgewählt wird.

17. Reifen gemäss Anspruch 16, worin die Monocarbonsäuren oder Dicarbonsäuren oder Derivate davon folgende sind: Maleinsäure, Fumarsäure, Citraconsäure, Itaconsäure, Acrylsäure, Methacrylsäure, Dithiodibernsteinsäure, Dithiodipropionsäure und davon abgeleitete Salze, Anhydride oder Ester oder Mischungen davon.

18. Reifen gemäss mindestens einem der vorhergehenden Ansprüche, worin das in der Herstellung des mit mindestens einem Phenolharz aufgepfropften elastomeren Polymers verwendete elastomere Polymer aus Schwefel-vernetzbarem elastomeren Polymer oder Copolymeren mit einer ungesättigten Kette mit einer Glasübergangstemperatur unterhalb von 20°C ausgewählt wird.

19. Reifen gemäss mindestens einem der vorhergehenden Ansprüche, worin die vernetzbare elastomere Basis mindestens ein zweites elastomeres Polymer in einer Menge von nicht höher als 70 phr umfasst.

20. Reifen gemäss Anspruch 19, worin die vernetzbare elastomere Basis mindestens ein zweites elastomeres Polymer in einer Menge von 0 bis 50 phr umfasst.

21. Reifen gemäss Anspruch 19 oder 20, worin das mindestens eine zweite elastomere Polymer ausgewählt wird aus:
- natürlichem oder synthetischem cis-1,4-Polyisopren, 3,4-Polyisopren, Polybutadien, gegebenenfalls halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon;
- Ethylen/Propylen-Copolymeren (EPR) oder Ethylen/Propylen/Dien-Copolymeren (EPDM); Polyisobuten; Butylkautschuken; Halogenbutylkautschuken, insbesondere Chlorbutyl- oder Brombutylkautschuken, oder Mischungen davon.

## Revendications

1. Pneu comprenant au moins un élément structurel incluant un matériau élastomérique réticulé obtenu par réticulation d'une composition élastomérique réticulable comprenant une base élastomérique réticulable comprenant au moins 30 phr d'au moins un polymère élastomérique greffé avec au moins une résine phénolique.

2. Pneu selon la revendication 1, dans lequel ladite base élastomérique réticulable comprend de 50 phr à 100 phr d'au moins un polymère élastomérique greffé avec au moins une résine phénolique.

3. Pneu selon la revendication 1 ou 2, comprenant:
- une structure de carcasse de forme sensiblement toroïdale, ayant des bords latéraux opposés associés respectivement avec des structures de talon à droite et à gauche, lesdites structures de talon comprenant au moins une tringle et au moins un bourrage de talon;
- une structure de ceinture appliquée dans une position radialement externe par rapport à ladite structure de carcasse;
- une bande de roulement superposée radialement sur ladite structure de ceinture;
- une paire de parois latérales appliquées latéralement sur les côtés opposés par rapport à ladite structure de carcasse;
dans lequel ledit élément structurel est une bande de roulement.

4. Pneu selon l'une quelconque des revendications précédentes, dans lequel ladite au moins une résine phénolique est greffée directement sur le polymère élastomérique.

5. Pneu selon l'une quelconque des revendications 1 à 3, dans lequel ladite au moins une résine phénolique est greffée sur le polymère élastomérique par au moins un groupe fonctionnel.

6. Pneu selon l'une quelconque des revendications précédentes, dans lequel ledit polymère élastomérique greffé avec au moins une résine phénolique a un poids moléculaire moyen (M_{w}) non inférieur à 80,000.

7. Pneu selon l'une quelconque des revendications précédentes, dans lequel ledit polymère élastomérique greffé avec au moins une résine phénolique a une viscosité Mooney ML(1+4) non inférieure à 40.

8. Pneu selon l'une quelconque des revendications précédentes, dans lequel ladite résine phénolique est greffée sur le polymère élastomérique au moyen d'un procédé comprenant:
- alimenter au moins un polymère élastomérique et au moins une résine phénolique dans au moins une extrudeuse comprenant: un boîtier incluant au moins une ouverture d'alimentation et une ouverture de décharge et au moins une vis montée rotative dans ledit boîtier;
- mélanger et ramollir ledit mélange de façon à obtenir un polymère élastomérique greffé avec au moins une résine phénolique;
- décharger le polymère élastomérique obtenu à l'étape ci-dessus à travers l'ouverture de décharge.

9. Pneu selon la revendication 8, dans laquelle ledit polymère élastomérique contient au moins un groupe fonctionnel.

10. Pneu selon l'une quelconque des revendications 1 à 7, dans lequel ladite résine phénolique est greffée sur ledit polymère élastomérique au moyen d'un procédé comprenant:
- alimenter au moins un polymère élastomérique, au moins un monomère fonctionnalisé, et au moins une résine phénolique, dans au moins une extrudeuse comprenant: un boîtier comprenant au moins une ouverture d'alimentation et une ouverture de décharge, et au moins une vis montée rotative dans ledit boîtier;
- mélanger et ramollir ledit mélange de façon à obtenir un polymère élastomérique greffé avec au moins une résine phénolique;
- décharger le polymère élastomérique obtenu à l'étape ci-dessus à travers l'ouverture de décharge.

11. Pneu selon l'une quelconque des revendications précédentes, dans lequel ladite au moins une résine phénolique est sélectionnée parmi:
- les résines phénoliques de type novolaque ou les résines phénoliques de type résol obtenues par la réaction d'un composé phénolique tel que le phénol, le phénol substitué alkyle, le phénol substitué arylalkyle ou alkylaryle, le résorcinol, le résorcinol substitué alkyle, le résorcinol substitué arylalkyle ou alkylaryle, ou leurs mélanges, avec un aldéhyde tel que le formaldéhyde, le p-formaldéhyde, le butyraldehyde, le benzaldéhyde, le salicylaldehyde, l'acétaldéhyde, le propionaldéhyde, le crotonaldéhyde, le butyraldéhyde, l'iso-butyraldéhyde, le n-valer-aldéhyde, le crotonaldéhyde, le cinnamaldehyde, ou leurs mélanges;
- les résines phénoliques obtenues par réaction de phénol substitué alkyle et d'acétylène tel que la résine p-t-butylphénol-acétylène;
- les résines de mélamine substituée telles que les résines oxymethylmelamine N-substituées;
- les résines terpènes phénoliques obtenues par alkylation de composés phénoliques avec des hydrocarbures terpéniques.

12. Pneu selon la revendication 11, dans lequel ladite résine phénolique est choisie parmi les résines phénoliques de type novolaque, les résines phénoliques de type résol, ou leurs mélanges.

13. Pneu selon la revendication 11 ou 12, dans lequel les résines phénoliques de type novolaque, ou les résines phénoliques de type résol, sont choisies parmi: résine octylphénol-formaldéhyde, résine octylphénol-formaldéhyde contenant des groupes méthylol, ou leur mélange.

14. Pneu selon la revendication 5 ou 9, dans lequel ledit au moins un groupe fonctionnel est choisi parmi: groupes carboxyliques; groupes carboxylates; groupes anhydrides; groupes esters, ou leurs mélanges.

15. Pneu selon la revendication 14, dans lequel ledit au moins un groupe fonctionnel est introduit dans le polymère élastomérique au moyen d'un procédé comprenant:
- alimenter au moins un polymère élastomérique et au moins un monomère fonctionnalisé dans au moins une extrudeuse comprenant: un boîtier incluant au moins une ouverture d'alimentation et une ouverture de décharge, et au moins une vis monté rotative dans ledit boîtier;
- mélanger et ramollir ledit mélange de façon à obtenir un polymère élastomérique incluant au moins un groupe fonctionnel;
- décharger le polymère élastomérique obtenu à l'étape ci-dessus à travers l'ouverture de décharge.

16. Pneu selon la revendication 10 ou 15, dans lequel ledit au moins un monomère fonctionnalisé est choisi parmi les acides monocarboxyliques ou dicarboxyliques, ou leurs dérivés, tels que les sels, anhydrides ou esters.

17. Pneu selon la revendication 16, dans lequel lesdits acides monocarboxyliques ou dicarboxyliques ou leurs dérivés sont: l'acide maléique, l'acide fumarique, l'acide citraconique, l'acide itaconique, l'acide acrylique, l'acide méthacrylique, l'acide dithiodisuccinique, l'acide dithiodipropionique, et les sels, anhydrides ou esters dérivés, ou leurs mélanges.

18. Pneu selon l'une quelconque des revendications précédentes, dans lequel le polymère élastomérique utilisé dans la production dudit polymère élastomérique greffé avec au moins une résine phénolique est sélectionné parmi le polymère élastomérique réticulable au soufre ou les copolymères avec une chaîne insaturée ayant une température de transition vitreuse inférieure à 20°C.

19. Pneu selon l'une quelconque des revendications précédentes, dans lequel ladite base élastomérique réticulable comprend au moins un deuxième polymère élastomérique en quantité non supérieure à 70 phr.

20. Pneu selon la revendication 19, dans lequel ladite base élastomérique réticulable comprend au moins un deuxième polymère élastomérique en quantité comprise entre 0 phr à 50 phr.

21. Pneu selon la revendication 19 ou 20, dans lequel ledit au moins un deuxième polymère élastomérique est choisi parmi:
- cis-1,4-polyisoprène naturel ou synthétique, 3,4-polyisoprène, polybutadiène, copolymères isoprène/isobutène éventuellement halogénés, copolymères 1,3-butadiène/acrylonitrile, copolymères stirene/1,3-butadiène, copolymères stirene/isoprene/1,3-butadiene, copolymères stirene/1,3-butadiene/acrylonitrile, ou leurs mélanges;
- copolymères éthylène/propylène (EPR) ou éthylène/propylène/diène (EPDM); polyisobutène; caoutchoucs butyles; caoutchoucs halobutyles, en particulier caoutchoucs chlorobutyles ou bromobutyles; ou leurs mélanges.
